(19) Europäisches Patentamt
European Patent Office
Office européen des brevets

(11) **EP 4 068 449 A1**

(12) **EUROPEAN PATENT APPLICATION**

(43) Date of publication:
**05.10.2022 Bulletin 2022/40**

(21) Application number: **22164090.7**

(22) Date of filing: **24.03.2022**

(51) International Patent Classification (IPC):
*H01M 10/052* (2010.01)     *H01M 10/056* (2010.01)
*H01M 50/491* (2021.01)

(52) Cooperative Patent Classification (CPC):
**H01M 10/052; H01M 10/056; H01M 50/491**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021060835**

(71) Applicant: **TOYOTA JIDOSHA KABUSHIKI KAISHA**
**Toyota-shi, Aichi-ken, 471-8571 (JP)**

(72) Inventor: **OSADA, Naoki**
**Toyota-shi, 471-8571 (JP)**

(74) Representative: **D Young & Co LLP**
**120 Holborn**
**London EC1N 2DY (GB)**

(54) **LITHIUM ION SECONDARY BATTERY**

(57)     A lithium ion secondary battery includes a housing, an electrode assembly, an electrolyte solution, and a porous member. The electrode assembly, the electrolyte solution, and the porous member are accommodated in the housing. The electrode assembly includes a positive electrode, a negative electrode, and a separator. The positive electrode and the negative electrode are stacked with the separator being interposed. The positive electrode, the negative electrode, and the separator are stacked in a vertical direction at the time of setting of the lithium ion secondary battery. The porous member is in contact with at least a part of a side surface of the electrode assembly. The porous member holds the electrolyte solution. The porous member is smaller in average pore diameter than each of the positive electrode and the negative electrode.

FIG.2

**Description**

This nonprovisional application is based on Japanese Patent Application No. 2021-060835 filed with the Japan Patent Office on March 31, 2021, the entire contents of which are hereby incorporated by reference.

BACKGROUND

Field

The present disclosure relates to a lithium ion secondary battery.

Description of the Background Art

Japanese Patent Laying-Open No. 2014-93128 and Japanese Patent Laying-Open No. 2005-294150 each disclose a non-aqueous electrolyte secondary battery (lithium ion secondary battery) in which a porous sheet (porous film) is wound around a stack type electrode assembly in which a positive electrode, a separator, and a negative electrode are stacked.

SUMMARY

In general, in a liquid battery, a positive electrode and a negative electrode are impregnated with an electrolyte solution and the electrolyte solution serves to conduct ions between the positive electrode and the negative electrode. When a battery having a stack structure is vertically placed (a battery is set such that a direction of stack corresponds to a vertical direction), however, what is called uneven liquid distribution occurs, in which an amount of filling with the electrolyte solution is different in the direction of stack. Specifically, the electrolyte solution is insufficient on an upper side and excessive on a lower side. Therefore, when charging and discharging is repeated, capacity retention may be lowered or lifetime of the battery may become short.

As a method of solving such a problem, Japanese Patent Laying-Open No. 2014-93128 proposes winding a porous member including pores where an electrolyte solution can be held around the stack type electrode assembly and Japanese Patent Laying-Open No. 2005-294150 proposes winding a porous film larger in pore diameter than a separator around the stack type electrode assembly.

With the method as above, however, the electrolyte solution in the electrode assembly may move out of the electrode assembly due to expansion and contraction of the electrode assembly with charging and discharging of the battery. Though the electrolyte solution may be held in the porous member, there may be a room for improvement in overcoming uneven liquid distribution. When the porous member contracts at the time of heat generation of the battery due to charging and discharging, for example, stress may be applied to an end or the like of the stack type electrode assembly and the battery may break.

An object of the present disclosure is to provide a lithium ion secondary battery capable of achieving suppression of lowering in capacity retention due to insufficiency in electrolyte solution while break thereof is suppressed.

Technical features and functions and effects of the present disclosure will be described below. A functional mechanism of the present disclosure, however, includes presumption. The scope of claims for patent should not be limited by whether or not the functional mechanism successfully works.

A lithium ion secondary battery according to the present disclosure includes a housing, an electrode assembly, an electrolyte solution, and a porous member. The electrode assembly, the electrolyte solution, and the porous member are accommodated in the housing. The electrode assembly includes a positive electrode, a negative electrode, and a separator. The positive electrode and the negative electrode are stacked with the separator being interposed. The positive electrode, the negative electrode, and the separator are stacked in a vertical direction at the time of setting of the lithium ion secondary battery. The porous member is in contact with at least a part of a side surface of the electrode assembly. The porous member holds the electrolyte solution. The porous member is smaller in average pore diameter than each of the positive electrode and the negative electrode.

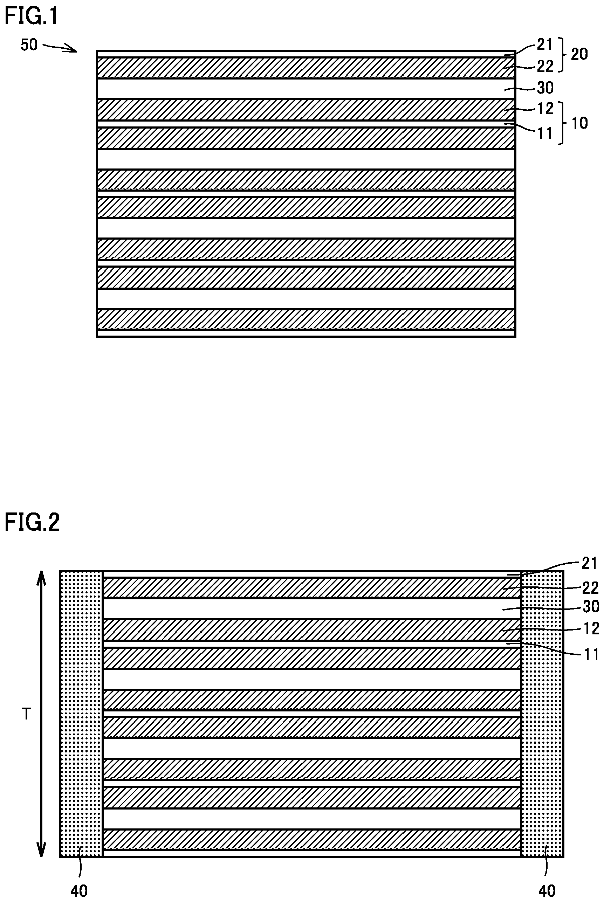

Referring to Fig. 2, in the lithium ion secondary battery in [1], a porous member 40 holding the electrolyte solution is in contact with at least a part of a side surface of an electrode assembly 50 in which a positive electrode 10 and a negative electrode 20 are stacked with a separator 30 being interposed. When the electrolyte solution is insufficient on the upper side of electrode assembly 50 due, for example, to repeated charging and discharging, the electrolyte solution can be supplied from porous member 40 to the upper side where the electrolyte solution is insufficient. Uneven liquid distribution in the vertical direction of electrode assembly 50 can thus be overcome.

Therefore, according to [1], lowering in capacity retention of the battery due to insufficiency in electrolyte solution can be suppressed while break of the battery is suppressed.

In the lithium ion secondary battery described in [1], the porous member may have the average pore diameter not smaller than 0.01 $\mu$m and not larger than 10 $\mu$m.

In the lithium ion secondary battery described in [1] or [2], the porous member may have a porosity not lower than 30% and not higher than 90%.

In the lithium ion secondary battery described in any one of [1] to [3], the porous member has a heat resistance temperature preferably not lower than 70°C.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a schematic cross-sectional view showing an exemplary electrode assembly included in a lithium ion secondary battery in the present embodiment.
Fig. 2 is a schematic cross-sectional view showing an exemplary electrode assembly and an exemplary porous member included in the lithium ion secondary battery in the present embodiment.
Fig. 3 shows a graph of a result of measurement by mercury intrusion, of a pore distribution in a porous member, a positive electrode, and a negative electrode according to Example 2.
Fig. 4 shows a profile in thermogravimetry of the porous member and the negative electrode according to Example 1 and Comparative Example 1.

DESCRIPTION OF THE PREFERRED EMBODIMENTS

An embodiment of the present disclosure (which is herein also denoted as the "present embodiment") will be described below. The description below, however, does not limit the scope of claims for patent. A lithium ion secondary battery may be abbreviated as a "battery" below.

<Lithium Ion Secondary Battery>

A lithium ion secondary battery in the present embodiment includes a housing, an electrode assembly, an electrolyte solution, and a porous member. The electrode assembly, the electrolyte solution, and the porous member are accommodated in the housing. The electrode assembly includes a positive electrode, a negative electrode, and a separator. The positive electrode and the negative electrode are stacked with the separator being interposed. The positive electrode, the negative electrode, and the separator are stacked in a vertical direction at the time of setting of the lithium ion secondary battery. The porous member is in contact with at least a part of a side surface of the electrode assembly. The porous member holds the electrolyte solution. The porous member is smaller in average pore diameter than each of the positive electrode and the negative electrode.

Fig. 1 is a schematic cross-sectional view showing an exemplary electrode assembly included in a lithium ion secondary battery in the present embodiment. Fig. 2 is a schematic cross-sectional view showing an exemplary electrode assembly and an exemplary porous member included in the lithium ion secondary battery in the present embodiment.

Referring to Figs. 1 and 2, a battery in the present embodiment includes a housing (not shown), electrode assembly 50, an electrolyte solution (not shown), and porous member 40. Electrode assembly 50, the electrolyte solution, and porous member 40 are accommodated in the housing. Electrode assembly 50 includes positive electrode 10, separator 30, and negative electrode 20, and positive electrode 10 and negative electrode 20 are alternately stacked with separator 30 being interposed. Positive electrode 10, negative electrode 20, and separator 30 are stacked in the vertical direction at the time of setting (use) of the battery, and porous member 40 is in contact with at least a part of a side surface of the electrode assembly.

(Electrode Assembly)

Electrode assembly 50 includes positive electrode 10, negative electrode 20, and separator 30. Positive electrode 10 is connected to a positive terminal (not shown). Negative electrode 20 is connected to a negative terminal (not shown).

Electrode assembly 50 is of a stack type. Electrode assembly 50 is formed, for example, by stacking positive electrode 10, separator 30, and negative electrode 20 in the vertical direction at the time of setting (use). Electrode assembly 50 is formed by stacking positive electrode 10 and negative electrode 20 with separator 30 being interposed.

As shown in Fig. 2, electrode assembly 50 has a thickness T preferably not smaller than 5 mm and more preferably not smaller than 7 mm.

[Positive Electrode]

Positive electrode 10 includes a positive electrode current collection foil 11 and a positive electrode composite material 12. Positive electrode current collection foil 11 may be, for example, an aluminum (Al) foil. Positive electrode current collection foil 11 may have a thickness, for example, not smaller than 10 $\mu$m and not larger than 30 $\mu$m.

Positive electrode composite material 12 may have a thickness, for example, not smaller than 10 $\mu$m and not larger than 200 $\mu$m. Positive electrode composite material 12 contains at least a positive electrode active material. Positive electrode composite material 12 may be composed, for example, substantially of a positive electrode active material. Positive electrode composite material 12 may contain, for example, a solid electrolyte, a conductive material, and a binder in addition to the positive electrode active material. The positive electrode active material may include, for example, at least one selected from the group consisting of lithium cobalt oxide, nickel lithium oxide, lithium manganese oxide, lithium nickel cobalt manganese oxide (for example, $LiNi_{1/3}Co_{1/3}Mn_{1/3}O_2$), lithium nickel cobalt aluminum oxide, and lithium iron phosphate. The positive electrode active material may be subjected to surface treatment. A buffer layer may be formed on a surface of the positive electrode active material by the surface treatment. The buffer layer may contain, for example, lithium niobate ($LiNbO_3$). The solid electrolyte may include, for example, a sulfide solid electrolyte [for example, LiBr-LiI-($Li_2S$-$P_2S_5$) or the like]. The conductive material may include a carbon material such as carbon black (CB), acetylene black (AB), Ketjenblack, and graphite. The binder may contain, for example, polyvinylidene difluoride (PVdF), polytetrafluoroethylene (PTFE), and/or polyacrylic acid (PAA).

Positive electrode 10 has an average pore diameter, for example, not smaller than 0.1 $\mu$m and not larger than 1 $\mu$m. The average pore diameter refers to a pore diameter at which a cumulative pore volume in a pore distribution measured with a mercury intrusion porosimeter attains to 50% of the total pore volume.

Positive electrode 10 has a porosity, for example, not lower than 10% and not higher than 50%. The porosity is calculated from an actual volume measured with the mercury intrusion porosimeter and a theoretical volume calculated from a material for the electrode.

[Negative Electrode]

Negative electrode 20 includes a negative electrode current collection foil 21 and a negative electrode composite material 22. Negative electrode current collection foil 21 may be, for example, a copper (Cu) foil or a nickel (Ni) foil. Negative electrode current collection foil 21 may have a thickness, for example, not smaller than 5 $\mu$m and not larger than 30 $\mu$m.

Negative electrode composite material 22 may have a thickness, for example, not smaller than 10 $\mu$m and not larger than 200 $\mu$m. Negative electrode composite material 22 contains at least a negative electrode active material. Negative electrode composite material 22 may be composed, for example, substantially of a negative electrode active material. Negative electrode composite material 22 may include, for example, a solid electrolyte, a conductive material, and a binder in addition to the negative electrode active material. The negative electrode active material may contain, for example, at least one selected from the group consisting of graphite, soft carbon, hard carbon, silicon, silicon oxide, a silicon-based alloy, tin, tin oxide, a tin-based alloy, and lithium titanate ($Li_4Ti_5O_{12}$). The solid electrolyte may include, for example, a sulfide solid electrolyte [for example, LiBr-LiI-($Li_2S$-$P_2S_5$) or the like]. The conductive material may include a carbon material such as carbon black (CB), acetylene black (AB), Ketjenblack, and graphite. The binder may contain polyvinylidene difluoride (PVdF), polytetrafluoroethylene (PTFE), and/or polyacrylic acid (PAA).

Negative electrode 20 has an average pore diameter, for example, not smaller than 1 $\mu$m and not larger than 5 $\mu$m. Negative electrode 20 has a porosity, for example, not lower than 10% and not higher than 50%.

[Separator]

Separator 30 is interposed between positive electrode 10 and negative electrode 20. Separator 30 separates positive electrode 10 and negative electrode 20 from each other.

Separator 30 is porous. Separator 30 has an average pore diameter, for example, not smaller than 0.1 $\mu$m and not larger than 10 $\mu$m. Separator 30 has a porosity, for example, not lower than 35% and not higher than 55%.

Separator 30 may be composed of an electrically insulating material. Separator 30 may be composed, for example, of polyethylene (PE) or polypropylene (PP).

(Electrolyte Solution)

The electrolyte solution contains a solvent and a support electrolyte. The solvent is aprotic. The solvent may contain any component. The solvent may be, for example, ethylene carbonate (EC), propylene carbonate (PC), butylene carbonate (BC), dimethyl carbonate (DMC), ethyl methyl carbonate (EMC), or diethyl carbonate (DEC). A single type of solvent may be used alone, or two or more types of solvents may be used as being combined.

The support electrolyte is dissolved in the solvent. The support electrolyte may be, for example, $LiPF_6$, $LiBF_4$, or $LiN(FSO_2)_2$. A single type of support electrolyte may be used alone, or two or more types of support electrolytes may be used as being combined. A molar concentration of the support electrolyte may be, for example, not lower than 0.5 mol/L and not higher than 2 mol/L.

The electrolyte solution may further contain any additive. The electrolyte solution may contain, for example, at least 0.1% and at most 5% of additive at a mass fraction. The additive may be, for example, vinylene carbonate (VC), lithium difluorophosphate ($LiPO_2F_2$), lithium fluorosulfonate ($FSO_3Li$), or lithium bis(oxalato)borate (LiBOB). A single type of additive may be used alone, or two or more types of additives may be used as being combined.

(Porous Member)

Porous member 40 should only be in contact with at least a part of a side surface perpendicular to the direction of stack of electrode assembly 50 and may be in contact with the entire side surface. So long as break of electrode assembly 50 due to expansion and contraction of porous member 40 can be suppressed, porous member 40 may be in contact with a part of a surface (an upper surface and a bottom surface at the time of setting of the battery) of electrode assembly 50 other than the side surface. Porous member 40, however, is preferably not in contact with the entire surface of electrode assembly 50 other than the side surface and more preferably not in contact with the surface of electrode assembly 50 other than the side surface.

Porous member 40 holds the electrolyte solution. Porous member 40 is smaller in average pore diameter than each of positive electrode 10 and negative electrode 20 that make up electrode assembly 50 and preferably than any member of positive electrode 10, negative electrode 20, and separator 30.

When the electrolyte solution in electrode assembly 50 becomes insufficient, porous member 40 can supply the electrolyte solution. Reasons why porous member 40 is able to supply the electrolyte solution to electrode assembly 50 may be as below. A temperature in the battery is varied by charging and discharging of the battery and the electrolyte solution expands or contracts. The porous member is smaller in average pore diameter than the electrode assembly. In general, with increase in temperature, the volume of the porous member and the electrolyte solution increases. At this time, as the average pore diameter is smaller, an internal pressure more readily increases, and a component smaller in average pore diameter tends to release liquid earlier. Therefore, the porous member releases the electrolyte solution earlier than the electrode assembly. Therefore, when the electrolyte solution in the electrode assembly becomes insufficient, the porous member is able to supply the electrolyte solution to the electrode assembly. After charging and discharging of the battery, the temperature in the battery decreases and the electrolyte solution is again supplied to the porous member.

Porous member 40 contains at least a porous material. Porous member 40 may contain any additive in addition to the porous material. Examples of the porous material include polyethylene (PE), polypropylene (PP), activated carbon, zeolite, alumina, and silicon carbide (SiC), and zeolite is preferred. The additive may be, for example, a binder. Examples of the binder include polyvinylidene difluoride (PVdF), polytetrafluoroethylene (PTFE), and polyacrylic acid (PAA).

Porous member 40 has the average pore diameter preferably not smaller than 0.01 $\mu$m and not larger than 10 $\mu$m and more preferably not smaller than 0.05 $\mu$m and not larger than 1 $\mu$m. When porous member 40 has the average pore diameter smaller than 0.01 $\mu$m, porous member 40 releases the electrolyte solution at a temperature lower than a temperature at which porous member 40 having the average pore diameter not smaller than 0.01 $\mu$m releases the electrolyte solution. Therefore, liquid replenishment capability of porous member 40 becomes poor. When the average pore diameter of porous member 40 exceeds 10 $\mu$m, this average pore diameter is larger than the average pore diameter of electrode assembly 50, and hence porous member 40 releases the electrolyte solution at a temperature higher than a temperature at which electrode assembly 50 releases the electrolyte solution. Therefore, liquid replenishment capability of porous member 40 becomes poor.

Porous member 40 is preferably higher in porosity than any member of positive electrode 10, negative electrode 20, and separator 30 that make up electrode assembly 50. Porous member 40 has the porosity preferably not lower than 30% and not higher than 90%, more preferably not lower than 45% and not higher than 80%, and particularly preferably not lower than 50% and not higher than 75%.

Porous member 40 is preferably heat resistant and preferably has a heat resistance temperature not lower than 70°C. When porous member 40 has a heat resistance temperature lower than 70°C, deformation or break may occur at a normal operating temperature of the battery. A heat resistance temperature of 70°C means that a volume of voids or a porosity is not varied after the porous member is exposed to an environment at 70°C and then set back to a room temperature.

(Recovery by Heating)

When capacity retention of a battery is lowered or when lowering in capacity retention of a battery is expected, recovery-by-heating treatment in which a battery is heated to a prescribed temperature may be performed. The prescribed temperature refers to a temperature higher than a temperature at which the porous member releases the electrolyte solution and it should be a temperature lower than the temperature at which the electrode assembly releases the electrolyte solution. The temperature may be, for example, not lower than 35°C and not higher than 70°C and not lower than 40°C and not higher than 55°C. A heating time period should only be a time period during which the electrolyte solution is released from the porous member and supplied to the electrode assembly, and it may be set, for example, to a time period not shorter than one minute and not longer than one hundred and eighty minutes or not shorter than fifteen minutes and not longer than one hundred and twenty minutes. Lowering in capacity retention of the battery should only be determined by a conventionally known method and can be determined, for example, based on a capacity in a section between any voltages.

Examples will be described below. The example below does not limit the scope of claims for patent.

<Example 1>

(Manufacturing of Positive Electrode)

Materials below were prepared.

Positive electrode active material: $LiNi_{1/3}Co_{1/3}Mn_{1/3}O_2$
Conductive material: AB
Binder: PVdF
Dispersion medium: N-methyl-2-pyrrolidone
Positive electrode current collection foil: Al foil

Positive electrode slurry was prepared by mixing the positive electrode active material, the conductive material, the binder, and the dispersion medium. The positive electrode composite material was formed by applying the positive electrode slurry to a surface of a positive electrode current collector and drying the positive electrode slurry. The positive electrode was manufactured by compressing the positive electrode composite material.

(Manufacturing of Negative Electrode)

Materials below were prepared.

Negative electrode active material: natural graphite
Conductive material: AB
Binder: PVdF
Solvent: water
Negative electrode current collection foil: Cu foil

Negative electrode slurry was prepared by mixing the negative electrode active material, the conducive material, the binder, and the solvent. The negative electrode composite material was formed by applying the negative electrode slurry to a surface of a negative electrode current collector and drying the negative electrode slurry. The negative electrode was manufactured by compressing the negative electrode composite material.

(Manufacturing of Separator)

A separator (porous film) having a thickness of 15 $\mu$m was prepared. The separator was in a three-layered structure. The three-layered structure was formed by stacking a porous layer of polypropylene (PP), a porous layer of polyethylene (PE), and a porous layer of polypropylene (PP) in this order. The separator (as a whole) had the porosity of 45%.

(Manufacturing of Electrode Assembly)

A stack was formed by stacking the separator, the positive electrode, the separator, and the negative electrode in this order. The electrode assembly was manufactured by stacking twenty-four stacks each including a pair of the positive electrode and the negative electrode. The electrode assembly had a thickness (corresponding to T in Fig. 2) of 9.5 mm.

(Preparation of Electrolyte Solution)

A mixed solvent was prepared by mixing ethylene carbonate (EC), dimethyl carbonate (DMC), and ethyl methyl carbonate (EMC). The electrolyte solution composed as below was prepared by dissolving $LiPF_6$ in the mixed solvent.

Electrolyte solution solvent: EC:DMC:EMC = 3:4:3 (volume ratio)
$LiPF_6$: 1.0 mol/L

(Manufacturing of Porous Member)

The porous member was manufactured by making a paste obtained by mixing 80 mass % of zeolite and 20 mass % of polyacrylic acid in distilled water, press-forming the paste by applying a pressure by using a tablet press machine, and heating the formed paste in an oven at 400°C.

(Manufacturing of Lithium Ion Secondary Battery)

The porous member was attached to be in contact with the entire surface of each of opposing side surfaces perpendicular to the direction of stack of the electrode assembly. A pouch made of an aluminum laminated film was prepared as the housing. The electrode assembly to which the porous member was attached was accommodated in the housing. The electrolyte solution was introduced into the housing. The lithium ion secondary battery in Example 1 was manufactured as set forth above.

<Examples 2 and 3>

Lithium ion secondary batteries were manufactured as in Example 1 except for change in content of zeolite and polyacrylic acid which were materials for the porous member. In Example 2, a material obtained by mixing 70 mass % of zeolite and 30 mass % of polyacrylic acid was employed as the material for the porous member, and in Example 3, a material obtained by mixing 60 mass % of zeolite and 40 mass % of polyacrylic acid was employed as the material for the porous member.

<Comparative Examples 1 to 3>

Lithium ion secondary batteries were manufactured as in Example 1 except for change in material for the porous member from zeolite to alumina and change in content of alumina and polyacrylic acid and in median diameter d50 of alumina. In Comparative Example 1, a material obtained by mixing 80 mass % of alumina (having median diameter d50 of 15 μm) and 20 mass % of polyacrylic acid was employed as the material for the porous member. In Comparative Example 2, a material obtained by mixing 80 mass % of alumina (having median diameter d50 of 5 μm) and 20 mass % of polyacrylic acid was employed as the material for the porous member. In Comparative Example 3, a material obtained by mixing 70 mass % of alumina (having median diameter d50 of 1 μm) and 30 mass % of polyacrylic acid was employed as the material for the porous member.

<Evaluation>

(Measurement of Average Pore Diameter of Porous Member, Positive Electrode, and Negative Electrode)

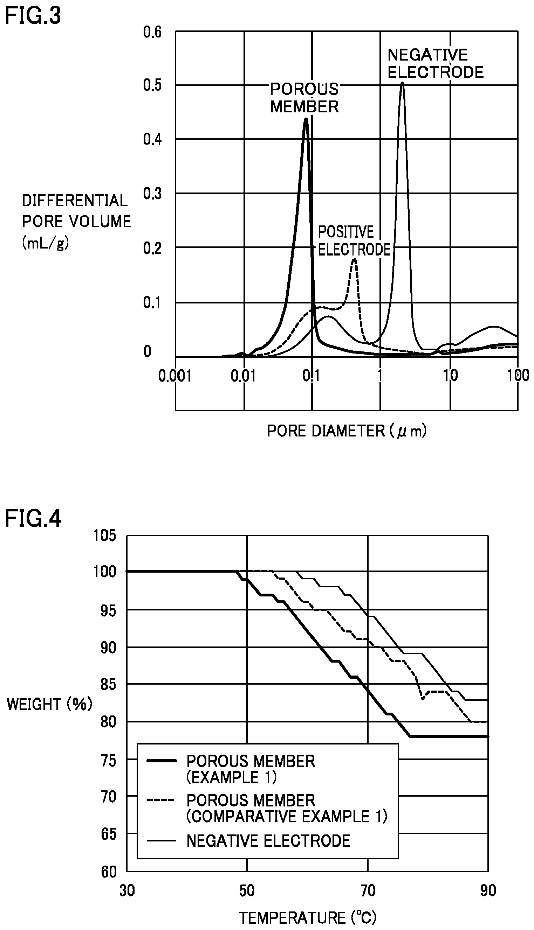

A pore distribution in each of the porous member, the positive electrode, and the negative electrode was measured by using a mercury intrusion porosimeter (Autopore V manufactured by Micromeritics). Results are shown in the field "Average Pore Diameter (μm)" in Table 1. Fig. 3 shows results (distribution of a differential pore volume) of measurement of the pore distribution in the porous member, the positive electrode, and the negative electrode according to Example 2. The number of samples was set to three and Table 1 shows an average value of those samples.

(Measurement of Porosity of Porous Member, Positive Electrode, and Negative Electrode)

The porosity of each of the porous member, the positive electrode, and the negative electrode was measured by using a mercury intrusion porosimeter (Autopore V manufactured by Micromeritics). Results are shown in the field "Porosity (%)" in Table 1. The number of samples was set to three and Table 1 shows an average value of those samples.

(Measurement of Weight Decrease Temperature)

A weight decrease temperature of the porous member and the negative electrode in each of Example 1 and Comparative Example 1 was measured by thermogravimetry (TG). The weight decrease temperature can be obtained by using a thermogravimetric analyzer (Thermoplus EV02 manufactured by RIGAKU Corporation), placing each sample on a sample pan made of aluminum, and measuring decrease in weight at the time of temperature increase at 10°C/min. Fig. 4 shows results.

(Initial Capacity)

In an environment at a temperature of 25°C, by constant current-constant voltage (cccv) charging, a state of charge (SOC) of each lithium ion secondary battery was adjusted to 100%. A current in constant current (cc) charging was set to 1/3 It. A voltage in constant voltage (cv) charging was set to 4.2 V. The battery was discharged to 3 V by cc discharging. A current in cc discharging was set to 1/3 It. A discharging capacity at this time was regarded as the "initial capacity." The SOC in the present Example hereinafter represents a percentage of a charging capacity at that time point with respect to the initial capacity. "It" is a sign representing an hour rate of the current. The current of 1 It is defined as a current at which a capacity corresponding to the SOC of 100% is discharged in one hour.

(Cycle Test)

Two hundred cycles of charging and discharging were carried out in each lithium ion secondary battery. Capacity retention was calculated by dividing the discharging capacity in the 200th cycle by the initial capacity. Results are shown in the field "Evaluation, Capacity Retention (%)" in Table 1.

(Storage Test)

The SOC of each lithium ion secondary battery after the cycle test was adjusted to 30%. Each lithium ion secondary battery was stored for five hours in a constant temperature bath set to 50°C. Capacity retention was calculated by dividing the discharging capacity after five hours by the initial capacity. Results are shown in the field "Evaluation, After 5 Hours (%)" in Table 1.

(Recovery Rate)

A recovery rate of each lithium ion secondary battery was calculated based on an expression below. Results are shown in the field "Recovery (%)" in Table 1. It is estimated that lowering in capacity retention is suppressed as the recovery rate is higher.

$$\text{Recovery rate (\%)} = \text{Capacity retention after storage test} - \text{Capacity retention after cycle test}$$

Table 1

| | | Average Pore Diameter ($\mu$m) | | | Porosity (%) | | | Evaluation | | |
|---|---|---|---|---|---|---|---|---|---|---|
| | | Porous Member | Positive Electrode | Negative Electrode | Porous Member | Positive Electrode | Negative Electrode | Capacity Retention (%) | After 5 Hours (%) | Recovery (%) |
| Example | 1 | 0.11 | 0.3 | 2.0 | 45 | 30 | 30 | 92 | 99 | 7 |
| | 2 | 0.08 | 0.3 | 2.0 | 50 | 30 | 30 | 93 | 99 | 6 |
| | 3 | 0.05 | 0.3 | 2.0 | 50 | 30 | 30 | 91 | 99 | 8 |
| Comparative Example | 1 | 12 | 0.3 | 2.0 | 55 | 30 | 30 | 90 | 92 | 2 |
| | 2 | 2 | 0.3 | 2.0 | 55 | 30 | 30 | 91 | 92 | 1 |
| | 3 | 1 | 0.3 | 2.0 | 50 | 30 | 30 | 91 | 93 | 2 |

<Results>

(Examples 1 to 3)

As shown in Table 1, in Examples 1 to 3, the porous member was smaller in average pore diameter than the positive electrode and the negative electrode. The porous member was higher in porosity than the positive electrode and the negative electrode. The recovery rate was from 6 to 8%.

(Comparative Examples 1 to 3)

In Comparative Example 1, the porous member was larger in average pore diameter than the positive electrode and the negative electrode. The porous member was higher in porosity than the positive electrode and the negative electrode. The recovery rate was 2%.

In Comparative Example 2, the porous member was larger in average pore diameter than the positive electrode and equal in average pore diameter to the negative electrode. The porous member was higher in porosity than the positive electrode and the negative electrode. The recovery rate was 1%.

In Comparative Example 3, though the porous member was smaller in average pore diameter than the negative electrode, the porous member was larger in average pore diameter than the positive electrode. The porous member was higher in porosity than the positive electrode and the negative electrode. The recovery rate was 2%.

As seen in the results shown in Fig. 4, the porous member in Example 1 was lower in temperature at which the weight started to decrease than the porous member in Comparative Example 1 and the negative electrode. It is estimated from this result that the porous member in Example 1 started to release the electrolyte solution at a temperature lower than a temperature at which the porous member in Comparative Example 1 and the negative electrode started to release the electrolyte solution.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

**Claims**

1.  A lithium ion secondary battery comprising:

    a housing;
    an electrode assembly;
    an electrolyte solution; and
    a porous member, wherein
    the electrode assembly, the electrolyte solution, and the porous member are accommodated in the housing,
    the electrode assembly includes a positive electrode, a negative electrode, and a separator,
    the positive electrode and the negative electrode are stacked with the separator being interposed,
    the positive electrode, the negative electrode, and the separator are stacked in a vertical direction at time of setting of the lithium ion secondary battery,
    the porous member is in contact with at least a part of a side surface of the electrode assembly,
    the porous member holds the electrolyte solution, and
    the porous member is smaller in average pore diameter than each of the positive electrode and the negative electrode.

2.  The lithium ion secondary battery according to claim 1, wherein
    the porous member has the average pore diameter not smaller than 0.01 $\mu$m and not larger than 10 $\mu$m.

3.  The lithium ion secondary battery according to claim 1 or 2, wherein
    the porous member has a porosity not lower than 30% and not higher than 90%.

4.  The lithium ion secondary battery according to any one of claims 1 to 3, wherein
    the porous member has a heat resistance temperature not lower than 70°C.

FIG.1

FIG.2

**FIG.3**

DIFFERENTIAL PORE VOLUME (mL/g) vs PORE DIAMETER ($\mu$m)

**FIG.4**

WEIGHT (%) vs TEMPERATURE (°C)

— POROUS MEMBER (EXAMPLE 1)

---- POROUS MEMBER (COMPARATIVE EXAMPLE 1)

— NEGATIVE ELECTRODE

Europäisches
Patentamt

European
Patent Office

Office européen
des brevets

# EUROPEAN SEARCH REPORT

Application Number

EP 22 16 4090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2015 0014795 A (LG CHEM LTD) 9 February 2015 (2015-02-09) * claims 1-5, 18 * * paragraphs [0001], [0005], [0106], [0112] - [0114] * | 1-4 | INV. H01M10/052 H01M10/056 H01M50/491 |
| X | JP 4 632015 B2 (YUASA CORPORATION) 23 February 2011 (2011-02-23) * claims 1, 2, 7 * * the whole document * | 1-4 | |
| X | JP 2010 153132 A (NISSAN MOTOR) 8 July 2010 (2010-07-08) * claims 1, 5 * * paragraphs [0035] - [0037] * | 1-4 | |

TECHNICAL FIELDS
SEARCHED       (IPC)

H01M

The present search report has been drawn up for all claims

| Place of search | Date of completion of the search | Examiner |
|---|---|---|
| Munich | 27 July 2022 | Riederer, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 4090

This annex lists the patent family members relating to the patent documents cited in  the above-mentioned European search report.
The members are as contained in the European Patent Office EDP file on
The European Patent Office is in no way liable for these particulars which are merely given for the purpose of information.

27-07-2022

| Patent document cited in search report | | Publication date | Patent family member(s) | | Publication date |
|---|---|---|---|---|---|
| KR 20150014795 | A | 09-02-2015 | NONE | | |
| JP 4632015 | B2 | 23-02-2011 | AU | 4120101 A | 15-10-2001 |
| | | | DE | 60127106 T2 | 08-11-2007 |
| | | | EP | 1271673 A1 | 02-01-2003 |
| | | | JP | 4632015 B2 | 23-02-2011 |
| | | | US | 2003064282 A1 | 03-04-2003 |
| | | | WO | 0175991 A1 | 11-10-2001 |
| JP 2010153132 | A | 08-07-2010 | JP | 5326553 B2 | 30-10-2013 |
| | | | JP | 2010153132 A | 08-07-2010 |

EPO FORM P0459

For more details about this annex : see Official Journal of the European Patent Office, No. 12/82

**EP 4 068 449 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021060835 A
- JP 2014093128 A
- JP 2005294150 A